# EUROPÄISCHE PATENTSCHRIFT

(11) **EP 4 491 087 B1**
(45) Veröffentlichungstag und Bekanntmachung des Hinweises auf die Patenterteilung: **07.10.2026**
(21) Anmeldenummer: 24180695.9
(22) Anmeldetag: 07.06.2024
(51) Int. Cl.: A47L 15/00, A47L 15/42, D06F 33/32, D06F 34/18, D06F 39/14, H04N 23/88, D06F 103/00, D06F 103/02, D06F 103/64, D06F 105/00, D06F 105/52

(54) **VERFAHREN ZUM BETREIBEN EINES HAUSHALTSGERÄTS**
METHOD FOR OPERATING A DOMESTIC APPLIANCE
PROCÉDÉ DE FONCTIONNEMENT D'UN APPAREIL MÉNAGER

(30) Priorität: 10.07.2023 DE 102023118142
(43) Veröffentlichungstag der Anmeldung: 15.01.2025
(73) Patentinhaber: Miele & Cie. KG, 33332 Gütersloh (DE)
(72) Erfinder: Lörcks, Sebastian, 59505 Bad Sassendorf (DE); Neumann, Richard, 32805 Hornbad-Meinberg (DE); Mersch-Justus, André, 33758 Schloß Holte-Stukenbrock (DE); Temminghoff, Robert, 33332 Gütersloh (DE)

(56) Entgegenhaltungen:
- WO-A1-2017/012818
- DE-A1- 102020 109 302
- US-A1- 2019 137 092
- US-A1- 2022 195 650

## Beschreibung

Die Erfindung betrifft ein Verfahren zum Betreiben eines Haushaltsgeräts, beispielsweise ein Wäschebehandlungsgerät. Waschmaschinen bieten unterschiedliche Betriebsprogramme mit denen sich für unterschiedliche Beladungen jeweils optimale Waschergebnisse erzielen lassen. Weitere Verfahren sind in der US 2022/195650 A1, DE 102020 109302 A1, WO 2017/012818 A1 und US 2019/137092 A1 beschrieben.

Der hier vorgestellte Ansatz stellt sich die Aufgabe, ein verbessertes Verfahren zum Betreiben eines Haushaltsgeräts zu schaffen.

Erfindungsgemäß wird diese Aufgabe durch ein Verfahren mit den Merkmalen der Hauptansprüche gelöst. Vorteilhafte Ausgestaltungen und Weiterbildungen der Erfindung ergeben sich aus den nachfolgenden Unteransprüchen. Die mit der Erfindung erreichbaren Vorteile bestehen neben einer besseren Nutzbarkeit einer Bilderfassungseinrichtung zum Erfassen eines Innenraums eines Haushaltgeräts in einer vereinfachten Bedienung des Haushaltgeräts.

Ein Verfahren zum Betreiben eines Haushaltsgeräts, das eine einen Innenraum des Haushaltsgeräts verschließende Tür und eine an der Tür angeordnete Bilderfassungseinrichtung aufweist, umfasst die folgenden Schritte:

Einlesen eines Abbilds eines Abschnitts einer Wand des Haushaltsgeräts, wobei das Abbild des Abschnitts Bilddaten repräsentiert, die unter Verwendung der Bilderfassungseinrichtung erfasst wurden, während sich die Tür in einem geöffneten Zustand befindet;
Bestimmen von für einen Weißabgleich der Bilderfassungseinrichtung geeigneten Korrekturwerte unter Verwendung des Abbilds des Abschnitts;
Einlesen eines Abbilds eines Innenraums des Haushaltsgeräts, wobei das Abbild des Innenraums Bilddaten repräsentiert, die unter Verwendung der Bilderfassungseinrichtung erfasst wurden, während sich die Tür in einem geschlossenen Zustand befindet; und Durchführen eines Weißabgleichs des Abbilds des Innenraums unter Verwendung der Korrekturwerte, um ein Bild des Innenraums zu erhalten.

Bei dem Haushaltsgerät handelt es sich beispielsweise um eine Waschmaschine, einen Waschautomaten oder einen Waschtrockner. Alternativ handelt es sich beispielsweise um einen Geschirrspüler oder ein Kühlgerät oder ein Gerät zur Zubereitung von Speisen, wie beispielsweise ein Dampfgarer, ein Ofen oder eine Mikrowelle. Dementsprechend können in den Innenraum Objekte eingeführt werden, die während des Betriebs des Haushaltsgeräts behandelt werden, beispielsweise gewaschen, gegart oder gekühlt. Die Tür kann entsprechend bekannter Türen entsprechender Haushaltsgeräte ausgeführt sein, wobei die Bilderfassungseinrichtung beispielsweise in die Tür integriert ist oder an einer Wand der Tür angebracht ist. Die Bilderfassungseinrichtung kann einen Bildsensor zum Erfassen von Bildern umfassen. Beispielsweise kann die Bilderfassungseinrichtung als eine Kamera ausgeführt sein. Typischerweise kann die Tür während eines Betriebs des Haushaltsgeräts geschlossen sein. Zum Einführen von Objekten in den Innenraum kann die Tür geöffnet werden. Der geöffnete Zustand der Tür kann einem vorbestimmten Öffnungswinkel der Tür entsprechen. Optional kann die Tür über den geöffneten Zustand hinaus noch weiter geöffnet werden. Bei der Wand des Haushaltsgeräts kann es sich um eine sogenannte Front des Haushaltsgeräts oder beispielsweise um eine Wand eines Türrahmens der Tür handeln. Um das Abbild des Abschnitts der Wand erfassen zu können, kann die Bilderfassungseinrichtung so angeordnet sein, dass der Abschnitt der Wand in einem Erfassungsbereich der Bilderfassungseinrichtung liegt, wenn sich die Tür in dem geöffneten Zustand befindet. Das Abbild des Abschnitts der Wand kann als ein Referenzbild zum Durchführen des Weißabgleichs dienen. Zum Bestimmen der für den Weißabgleich geeigneten Korrekturwerte kann auf bekannte Verfahren zurückgegriffen werden. Dementsprechend kann es sich bei den Korrekturwerten um Werte handeln, wie sie bei bekannten Verfahren zum Durchführen eines Weißabgleichs verwendet werden. Um das Abbild des Innenraums des Haushaltsgeräts erfassen zu können, kann die Bilderfassungseinrichtung so angeordnet sein, dass der Innenraum in einem Erfassungsbereich der Bilderfassungseinrichtung liegt, wenn sich die Tür in dem geschlossenen Zustand befindet. Zum Durchführen des Weißabgleichs des Abbilds des Innenraums kann auf bekannte Verfahren zurückgegriffen werden.

Die zum Bestimmen der Korrekturwerte erforderlichen Schritte können einmalig durchgeführt werden. Anschließend können die einmal bestimmten Korrekturwerte fortlaufend verwendet werden, um Abbilder des Innenraums einem Weißabgleich zu unterziehen.

Das Verfahren umfasst einen Schritt des Bereitstellens eines den geöffneten Zustand der Tür anzeigenden Öffnungssignals. Dabei wird der Schritt des Bestimmens der Korrekturwerte ansprechend auf das Öffnungssignal ausgeführt. Beispielsweise kann das Abbild des Abschnitts ansprechend auf das Öffnungssignal erfasst oder eingelesen werden oder das Abbild des Abschnitts kann bei bereits eingelesenem Abbild ansprechend auf das Öffnungssignal zum Bestimmen der Korrekturwerte verwendet werden. Vorteilhafterweise kann die Bestimmung der Korrekturwerte auf diese Weise dann durchgeführt werden, wenn sich die Tür in einer Stellung befindet, in der der Abschnitt der Wand von der Bilderfassungseinrichtung erfasst werden kann.

Beispielsweise kann im Schritt des Bereitstellens das Öffnungssignal unter Verwendung eines mit der Tür gekoppelten Winkelgebers bereitgestellt werden. Mit einem solchen Winkelgeber lässt sich einfach und präzise ein dem geöffneten Zustand zugeordneter Öffnungswinkel der Tür bestimmen.

Zusätzlich oder alternativ kann im Schritt des Bereitstellens das Öffnungssignal unter Verwendung eines durch ein Öffnen der Tür gestarteten Zeitgebers bereitgestellt werden. Ein Zeitpunkt des Öffnens kann beispielsweise unter Verwendung eines Schalters oder durch Auswertung eines von der Bilderfassungseinrichtung erfassten Abbilds erkannt werden. Der Zeitgeber kann beispielsweise ab dem Zeitpunkt des Öffnens eine vorbestimmte Zeitdauer abwarten und dann das Öffnungssignal bereitstellen. Diese Ausführungsform eignet sich insbesondere dann, wenn das Öffnen der Tür ohnehin bereits erfasst wird oder erfasste Abbilder fortlaufend entsprechend ausgewertet werden.

Zusätzlich oder alternativ kann das Verfahren einen Schritt des Auswertens des Abbilds des Abschnitts umfassen. Durch das Auswerten kann ein vorbestimmtes Merkmal in dem Abbild des Abschnitts erkannt werden, sofern es sich in dem Abbild befindet. Der Schritt des Bereitstellens des Öffnungssignals kann ansprechend auf ein Erkennen des vorbestimmten Merkmals durchgeführt werden. Vorteilhafterweise kann auf diese Weise auf eine Sensorik zum Erkennen einer Öffnung oder eines Öffnungswinkels der Tür verzichtet werden. Als das vorbestimmte Merkmal kann jedes von der Bilderfassungseinrichtung abbildbares Element verwendet werden, dass sich im Erfassungsbereich der Bilderfassungseinrichtung befindet, wenn der Abschnitt der Wand des Haushaltsgeräts von der Bilderfassungseinrichtung erfasst wird.

Beispielsweise kann dabei im Schritt des Auswertens ein Türschloss der Tür oder eine Kante der Wand des Haushaltsgeräts als das vorbestimmte Merkmal erkannt werden.

Das Verfahren kann einen Schritt des Erfassens des Abbilds des Abschnitts der Wand des Haushaltgeräts unter Verwendung der Bilderfassungseinrichtung umfassen. Der Schritt des

Erfassens kann durchgeführt werden, während sich die Tür in dem geöffneten Zustand befindet. Ferner kann das Verfahren einen Schritt des Erfassens des Abbilds des Innenraums des Haushaltsgeräts unter Verwendung der Bilderfassungseinrichtung umfassen. Der Schritt des Erfassens kann durchgeführt werden, während sich die Tür in dem geschlossenen Zustand befindet. Die erfassten Abbilder können jeweils beispielsweise in Form eines elektrischen Signals bereitgestellt werden.

Beispielsweise kann im Schritt des Erfassens das Abbild des Abschnitts erfasst werden, der eine Farbkarte oder eine farbige Fläche umfasst. Eine Farbkarte oder farbige Fläche eignet sich entsprechend bekannter Verfahren als Referenz für einen Weißabgleich.

Im Schritt des Erfassens kann das Abbild des Abschnitts erfasst werden, der einen Bereich einer Außenwand des Haushaltsgeräts repräsentiert. Beispielsweise kann dabei ein Bereich einer weißen Oberfläche der Außenwand abgebildet werden. Dadurch kann auf das Anbringen einer Farbkarte oder einer speziellen farbigen Fläche an dem Haushaltsgerät verzichtet werden.

Das Verfahren zum Betreiben eines entsprechenden Haushaltsgeräts umfasst die folgenden Schritte: Bestimmen eines Objektparameters zumindest eines von dem Bild abgebildeten Objekts; und Auswählen eines Betriebsprogramms zum Betreiben des Haushaltsgeräts unter Verwendung des Objektparameters.

Bei dem abgebildeten Objekt kann es sich beispielsweise um ein Wäschestück in einer Trommel einer Waschmaschine handeln. Bei dem Betriebsprogramm kann es sich um eines einer Mehrzahl auswählbarer Programme handeln. Beispielsweise kann im Schritt des Auswählens abhängig von dem Objektparameter ein zum Reinigen des Objekts optimales Waschprogramm ausgewählt werden.

Dazu kann im Schritt des Bestimmens beispielsweise eine Farbe, ein Material, eine Struktur, eine Größe, ein Muster und zusätzlich oder alternativ eine Art des Objekts als der Objektparameter bestimmt werden. Generell kann jede Charakteristik des Objekts als Objektparameter bestimmt werden, die sich zur Auswahl des Betriebsprogramms eignet.

Der hier vorgestellte Ansatz schafft ferner eine nicht beanspruchte Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein nicht beanspruchtes Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Ein entsprechendes Haushaltsgerät umfasst neben einer einen Innenraum des Haushaltsgeräts verschließenden Tür eine genannte Vorrichtung zur Durchführung einer Variante der vorgestellten Verfahren.

Ein Ausführungsbeispiel der Erfindung ist in den Zeichnungen rein schematisch dargestellt und wird nachfolgend näher beschrieben. Es zeigt
- Figur 1: eine Darstellung eines Ausführungsbeispiels eines Haushaltsgeräts;
- Figur 2: eine Darstellung eines Ausführungsbeispiels eines Haushaltsgeräts;
- Figur 3: eine schematische Darstellung eines Ausführungsbeispiels einer Vorrichtung; und
- Figur 4: ein Ausführungsbeispiel eines Ablaufdiagramms eines Verfahrens.

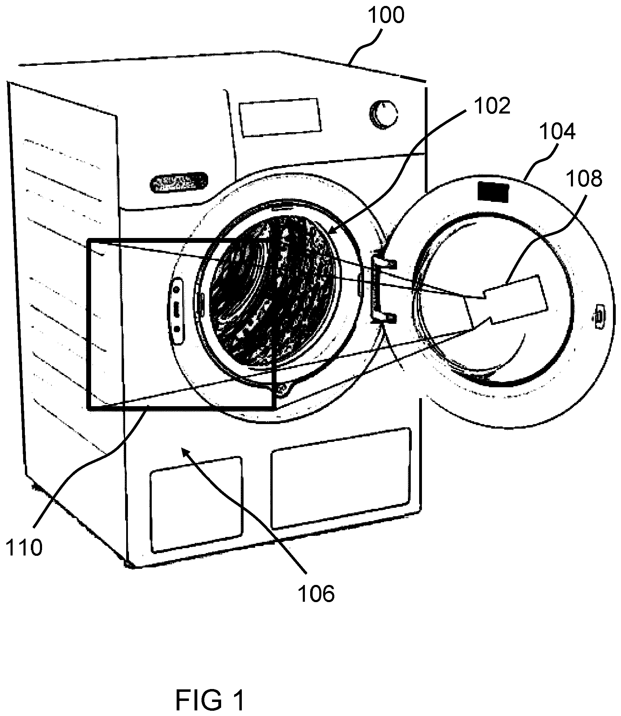

Figur 1 zeigt eine Darstellung eines Ausführungsbeispiels eines Haushaltsgeräts 100, beispielhaft in Form einer Waschmaschine. Die Waschmaschine weist einen Innenraum 102 auf, der beispielhaft durch eine Wäschetrommel ausgeformt wird. Der Innenraum 102 ist entsprechend bekannter Waschmaschinen durch eine Tür 104 verschließbar. In Figur 1 ist die Tür 104 in einem geöffneten Zustand gezeigt. Die Tür 104 ist an einer Wand 106, hier beispielhaft einer Front, des Haushaltsgeräts 100 angeordnet.

An der Tür 104 ist eine Bilderfassungseinrichtung 108, beispielhaft in Form einer Kamera, angeordnet. Die Bilderfassungseinrichtung 108 ist so ausgerichtet, dass ein Erfassungsbereich 110 der Bilderfassungseinrichtung 108 einen Bereich der Wand 106 umfasst, wenn sich die Tür 104 in dem geöffneten Zustand befindet. Der Erfassungsbereich 110 wird auch als Blickfeld der Bilderfassungseinrichtung 108 während des Öffnens der Tür 104 bezeichnet.

Wenn sich die Tür 104 in einem geschlossenen Zustand befindet, kann ein Bereich des Innenraums 102 von der Bilderfassungseinrichtung 108 erfasst werden.

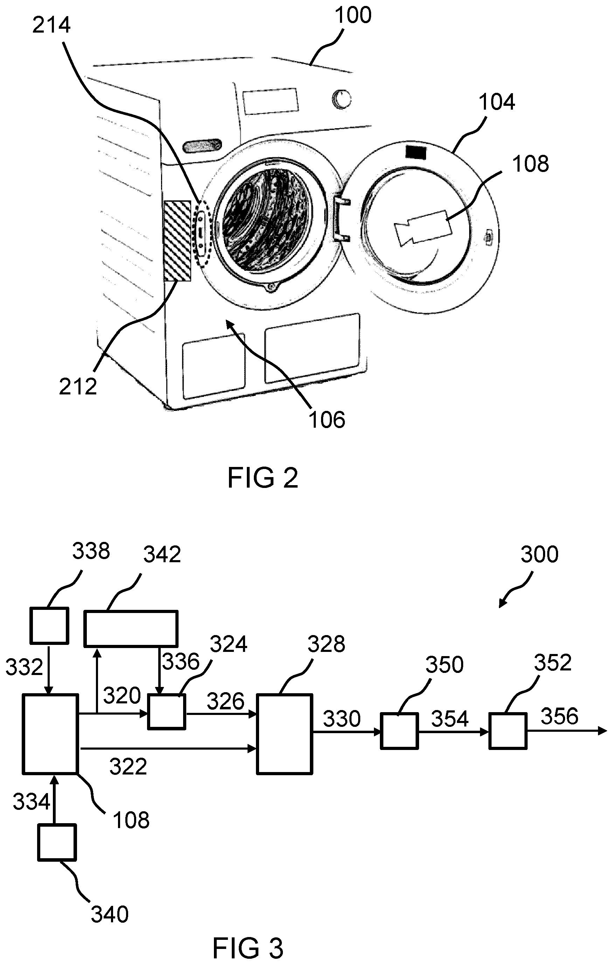

Figur 2eine Darstellung eines Ausführungsbeispiels eines Haushaltsgeräts 100, beispielsweise in Form der anhand von Figur 1 beschriebenen Waschmaschine. Die Tür 104 ist wieder in dem geöffneten Zustand dargestellt.

Ein von der Bilderfassungseinrichtung 108 erfasstes Abbild der Wand 106 bildet beispielhaft einen Abschnitt 212 der Wand 106 sowie optional eine Kontur eines Türschlosses 214 der Tür 104 ab. Der Abschnitt 212 wird gemäß einem Ausführungsbeispiel zur Durchführung eines Weißabgleichs der Bilderfassungseinrichtung 108 verwendet. Der Abschnitt 212 repräsentiert gemäß einem Ausführungsbeispiel eine definierte weiße Fläche neben dem Türschloss 214. Die Kontur des Türschlosses 214 wird gemäß einem Ausführungsbild in dem von der Bilderfassungseinrichtung 108 erfassten Abbild der Wand 106 erkannt und verwendet, um einen Öffnungswinkel der Tür 104 zu bestimmen und zusätzlich oder alternativ den Abschnitt 212 in dem von der Bilderfassungseinrichtung 108 erfassten Abbild der Wand 106 zu finden. Beispielsweise wird ein vorbestimmter Öffnungswinkel der Tür 104 angenommen, wenn die Kontur des Türschlosses 214 oder alternativ ein anderes geeignetes Merkmal, an einer vorbestimmten Position im Abbild der Wand 106 erkannt wird.

Das Haushaltsgerät 100 wird gemäß einem Ausführungsbeispiel zum Waschen von Kleidung verwendet. Dies gehört zu einer der unbeliebtesten Aufgaben, die regelmäßig im Haushalt anfallen. Personen möchten mit diesem Thema möglichst wenig Zeit verbringen. Gerade spezielle Flecken, wie zum Beispiel Gras, Blut oder Rotwein führen immer wieder dazu, dass der Nutzer sich jedoch intensiver mit dem Thema beschäftigen muss. Eine falsche Behandlung der Wäsche könnte zu irreversiblen Schäden an der Kleidung führen.

Auch die Auswahl des richtigen Waschprogramms trägt wesentlich zum Waschergebnis bei. Viele Waschmaschinen verfügen mittlerweile über mehr als 20 Programme, die jeweils mit verschiedenen Optionen gestartet werden können. Die Nutzer sind häufig von der Menge an Programmen überfordert und verwenden daher häufig nur ein Programm (z.B. Pflegeleicht) welches aber nicht immer zu optimalen Ergebnissen führt.

Gemäß einem Ausführungsbeispiel ermöglicht der hier beschriebene Ansatz eine automatisierte Auswahl eines geeigneten Programms, das im Folgenden auch als Betriebsprogramm bezeichnet wird. Dadurch kann das Reinigen der Kleidung möglichst einfach gestaltet werden.

Um bei der Auswahl des richtigen Waschprogramms zu unterstützen, wird zum Beispiel ein digitaler Waschassistent genutzt. Dabei kann man in einer App oder am Gerät, hier dem Haushaltsgerät 100, eingeben, welche Wäscheteile und welche Verschmutzung der Wäscheposten hat. Anschließend wird ein passendes Programm vorgeschlagen und teilweise auch direkt mit den richtigen Parametern eingestellt. Gemäß einem Ausführungsbeispiel werden solche Daten automatisiert erfasst, beispielsweise als Objektparameter, und zur Auswahl eines geeigneten Betriebsprogramms verwendet. Dies kann als Ersatz oder als Ergänzung zu Apps dienen, mit denen man die Waschetiketten in der Kleidung fotografieren kann, um eine Empfehlung zu erhalten. Das Abscannen jedes einzelnen Etiketts bedeutet jedoch einen hohen Mehraufwand für den Kunden. Ein solcher Mehraufwand kann durch den hier beschriebenen Ansatz vermieden werden.

Gemäß einem Ausführungsbeispiel ist die Bilderfassungseinrichtung 108 als eine Kamera ausgeführt, die einen Betriebsmodus des Haushaltsgeräts 100 ermöglicht, in dem das Haushaltsgerät 100 verschiedene Textilien erkennen kann und beispielsweise die Waschgeschwindigkeit, die Temperatur sowie die Rotationsart entsprechend anpassen kann. Dazu ist eine Anbringung der Bilderfassungseinrichtung 108 an der Tür 104 vorteilhaft.

Eine entsprechend angeordnete Bilderfassungseinrichtung 108 ermöglicht somit eine Wäscheerkennung ohne zusätzlichen Aufwand für den Nutzer. Dabei kann zumindest teilweise auf bekannte Verfahren und technische Lösungen zurückgegriffen werden, wie sie bereits bei Waschmaschinen mit Kameras eingesetzt werden.

Vorteilhafterweise kann der beschriebene Ansatz verwendet werden, um ein optimales Waschprogramm auszuwählen, ohne dass ein Nutzer ein angemessenes Fachwissen zum Thema Wäsche hat, ohne dass der Nutzer die Programme und Einstellmöglichkeiten der Waschmaschine kennt und ohne dass der Nutzer einen Assistenten nutzt, welcher zusätzlichen Aufwand bedeutet. Dies ist vorteilhaft, da die Eingaben und das Wissen des Nutzers von der Waschmaschine nicht verifiziert werden können. Macht der Nutzer eine falsche Eingabe oder Annahme, so ist in der Waschmaschine keine Sensorik vorhanden, die dieses erkennen und korrigieren kann.

Der beschriebene Ansatz ermöglicht in diesem Sinne eine erweiterte Automatisierung von Vorgängen im Kontext "Wäsche waschen".

Gemäß einem Ausführungsbeispiel ermöglicht der hier beschriebene Ansatz, dass die Wahl des Waschprogramms automatisiert wird, so dass der Benutzer kein Waschprogramm mehr wählen muss. Dazu werden für die einzelnen Wäscheteile die waschrelevanten Kriterien wie Farbe, Textilart, Struktur, Größe, Muster, Logo, Accessoires und die Wäscheart erkannt. Falls die einzelnen Wäscheteile nicht einzeln erkannt werden können, werden gemäß einem Ausführungsbeispiel für den Wäscheposten in seiner Gesamtheit zumindest die dominanten Farbanteile, Textilarten, Strukturen etc. bestimmt. Dazu wird beispielsweise ein Bild des Innenraums des Haushaltsgeräts 100 ausgewertet, um einen oder mehrere entsprechende Objektparameter als waschrelevante Kriterien zu erkennen.

Als eine in der Waschmaschine verbaute Sensorik, mit der die entsprechenden Parameter der Wäsche erfasst werden können, bietet sich die Bilderfassungseinrichtung 108 an, die beispielsweise einen Sensor in Form einer Kamera darstellt.

Wird als Bilderfassungseinrichtung 108 eine Kamera mit klassischen Bildwandler-Sensoren (CCD, CMOS) zur Bildverarbeitung eingesetzt, muss sichergestellt werden, dass die einzelnen Bilder, beispielsweise erfasste Abbilder des Innenraums des Haushaltsgeräts 100, bestimmte Kriterien erfüllen, unabhängig davon, ob Einzelbilder oder Videosequenzen verarbeitet werden.

Ein wesentliches Kriterium ist ein gleichbleibender Weißabgleich der einzelnen Bilder über die Zeit. Der Weißabgleich muss permanent korrigiert werden, da Umwelteinflüsse (änderndes Umgebungslicht, Kunstlicht, Temperaturänderungen des Sensors, etc.) dazu führen, dass die aufgenommenen Bilder andernfalls einen Farbstich aufweisen werden.

Der Weißabgleich erfolgt, indem in der Bildverarbeitungseinheit in jedem aufgenommenen Bild jedem Bildpixel ein Korrekturwert hinzugerechnet wird. Die Bestimmung derartiger Korrekturwerte ist das zentrale Element des Weißabgleichs. Üblicherweise werden diese entweder einmalig beim Start der Kamera aus dem ersten Bild oder kontinuierlich berechnet. In beiden Fällen muss sich entweder eine Fläche mit definierter Farbe, eine sogenannte Grauwertkarte im Erfassungsbereich der Kamera befinden, oder die Kamera sucht große, helle, zusammenhängende Flächen im Bild und schätzt die Korrekturwerte. Die zweite Variante ist in der Regel ungenauer und anfälliger für Fehler. Im Zusammenhang mit dem Einsatz einer Kamera in der Waschmaschine, vor allem in der Tür 104, tritt beim automatischen Weißabgleich zusätzlich das Problem auf, dass aufgrund der Bewegung die Korrekturwerte nochmals verfälscht werden.

Vorteilhafterweise ermöglicht der hier beschriebene Ansatz einen Weißabgleich ohne, dass ein manueller oder teilmanueller Abgleich unter Hinzunahme einer Grauwertkarte erforderlich ist, die der Benutzter bei jeder Öffnung der Waschmaschine der Kamera präsentieren müsste. Dennoch kann ein Ergebnis erzielt werden, dass auch durch einen solchen Abgleich über eine Grauwertkarte - oder eine andere, definierte Farbfläche - erzielt werden könnte.

Gemäß einem Ausführungsbeispiel wird dazu ein Weißabgleich Der

Bilderfassungseinrichtung 108, beispielsweise in Form einer Kamera, basierend auf einer bekannten Farbe der Maschinenfront, hier der Wand 106, durchgeführt.

Im Folgenden werden Ausführungsbeispiele beschrieben, wie ein entsprechender automatisierter Weißabgleich für die Bilderfassungseinrichtung 108, welche in der Tür 104 des Haushaltsgeräts 100, hier der Waschmaschine, eingebaut ist, erfolgt.

Wie bereits ausgeführt, ist der Weißabgleich anhand einer definierten Farbkarte, z. B. einer Grauwertkarte, vorteilhaft, was jedoch mit inakzeptablem Aufwand für den Nutzer der Waschmaschine verbunden ist.

Sofern die Bilderfassungseinrichtung 108 in der Tür 104 der Waschmaschine integriert ist, kann dem begegnet werden, indem eine Farbkarte im Blickfeld der Bilderfassungseinrichtung 108, z.B. auf der Front der Waschmaschine, neben der Öffnung, platziert wird oder alternativ ein Teil der Waschmaschinenform entsprechend eingefärbt wird. Die Farbkarte wird dann zunächst von der Bilderfassungseinrichtung 108 anhand der Form erkannt und anschließend wird der Weißabgleich durchgeführt. Aus ästhetischen Gründen ist eine Einfärbung von Teilen der Waschmaschine eher unerwünscht. Die Form der Karte muss eindeutig sein, z.B. durch einen geeigneten AR-Marker auf der Farbkarte, was aus ästhetischen Gründen ebenso unerwünscht ist.

Alternativ zur Einfärbung der Maschine oder der Aufbringung einer Farbkarte kann auch die vorhandene Farbe der Frontseite der Waschmaschine, hier beispielhaft der Wand 106 des Haushaltsgeräts 100, als Referenz für den Weißabgleich genutzt werden. Damit ergibt sich folgender Ablauf für den Weißabgleich der in der Tür 104 integrierten Bilderfassungseinrichtung 108:
Die Tür 104 wird geöffnet, beispielsweise indem ein Nutzer die Maschine öffnet.

Die Bilderfassungseinrichtung 108, beispielsweise in Form der Kamera, schwenkt zusammen mit der Tür 104 aus der Position "Blick in die Waschtrommel" nach außen in die Position "Blick in den Raum". Zumindest bei einem Blick in den Raum, der sich bei zumindest einem geöffneten Zustand der Tür 104 einstellt, befindet sich der zum Weißabgleich verwendbare Abschnitt 212 im Blickfeld der Bilderfassungseinrichtung 108.

Sobald die Bilderfassungseinrichtung 108 in einem dazu definierten Winkel steht, erfasst z.B. über einen Winkelgeber in der Tür 104, wird ein Bild von einem Ausschnitt der Waschmaschinen-Front aufgenommen. Das Bild wird im Folgenden auch als Abbild des Abschnitts 212 der Wand 106 bezeichnet.

Das Bild wird zur Berechnung des Weißabgleichs verwendet.

Jedes Öffnen der Tür 104 kann einen neuen Weißabgleich anstoßen.

Auf den erwähnten Winkelgeber kann verzichtet werden, falls die Bilderfassungseinrichtung 108 die Wand 106 anhand anderer Merkmale, so z.B. einer markanten Form, erkennen kann. Als ein entsprechendes Merkmal eignet sich z.B. das Türschloss 214, eine sich gegen den Hintergrund abhebende scharfe Kante der Waschmaschine, etc.. Zudem kann auf den erwähnten Winkelgeber verzichtet werden, falls die Bilderfassungseinrichtung 108 einen geeigneten geöffneten Zustand der Tür 104 anhand der verstrichenen Zeit nach dem Öffnen der Tür 104 schätzen kann.

Der Vorteil des Weißabgleichs besteht darin, dass der Abgleich anhand einer Referenz, hier beispielsweise dem Abschnitt 212 an der Front der Waschmaschine, erfolgt und entsprechend eine hohe Wiederholgenauigkeit erreicht werden kann.

Der beschriebene Ansatz ermöglicht zudem eine erweiterte Automatisierung von Vorgängen im Kontext "Wäsche waschen".

Figur 3eine schematische Darstellung eines Ausführungsbeispiels einer Vorrichtung 300 zum Bereiben eines Haushaltsgeräts wie es beispielsweise anhand der vorangegangenen Figuren beschrieben ist. Je nach Ausführungsbeispiel ist die Vorrichtung 300 ausgebildet, um das Haushaltsgerät oder nur die Bilderfassungseinrichtung 108 des Haushaltsgeräts zu betreiben.

Gemäß einem Ausführungsbeispiel ist die Bilderfassungseinrichtung 108 Teil der Vorrichtung 300. Die Vorrichtung 300 kann somit als eine Steuereinheit oder eine Elektronik des Haushaltsgeräts realisiert sein.

Die Bilderfassungseinrichtung 108 ist ausgebildet, um eines Abschnitts einer Wand des Haushaltsgeräts zu einem Zeitpunkt zu erfassen, in dem sich die Tür, an der die Bilderfassungseinrichtung 108 angeordnet ist, in einem geöffneten Zustand befindet. Dabei kann der geöffnete Zustand durch einen vorbestimmten Öffnungswinkel oder Öffnungswinkelbereich definiert sein. Die Bilderfassungseinrichtung 108 ist ausgebildet, um ein entsprechendes Abbild 320 des Abschnitts der Wand des Haushaltsgeräts bereitzustellen.

Zu einem Zeitpunkt, in dem sich die Tür in einem geschlossenen Zustand befindet, ist die Bilderfassungseinrichtung 108 ausgebildet, um ein Abbild 322 eines Innenraums des Haushaltsgeräts zu erfassen und das Abbild 322 des Innenraums bereitzustellen. Die Abbilder 320, 322 umfassen gemäß einem Ausführungsbeispiel Bilddaten wie sie beispielsweise von einer Kamera bereitgestellt werden.

Die Vorrichtung 300 umfasst eine Bestimmungseinrichtung 324, die ausgebildet ist, um Korrekturwerte 326 zu bestimmen, die anschließend für einen Weißabgleich der Bilderfassungseinrichtung 108 verwendet werden können. Beispielsweise ist die Bestimmungseinrichtung 324 ausgebildet, um das Abbild 320 des Abschnitts der Wand einzulesen und zum Bestimmen der Korrekturwerte 326 zu verwenden. Beispielsweise umfasst der Abschnitt dazu eine Farbkarte oder eine farbige Fläche oder einen Bereich der Außenwand des Haushaltsgeräts, dessen Farbe bekannt ist.

Die Vorrichtung 300 umfasst ferner eine Durchführungseinrichtung 328, die ausgebildet ist, um die Korrekturwerte 326 zu verwenden, um das Abbild 322 des Innenraums unter Verwendung der Korrekturwerte 326 einem Weißabgleich zu unterziehen und als Ergebnis ein Bild 330 des Innenraums zu erhalten. Dazu ist die Durchführungseinrichtung 328 gemäß einem Ausführungsbeispiel ausgebildet, um das das Abbild 322 einzulesen.

Gemäß einem Ausführungsbeispiel sind die Bestimmungseinrichtung 324 und die Durchführungseinrichtung 328 in die Bilderfassungseinrichtung 108 integriert, sodass der Weißabgleich direkt beim Erfassen des Abbilds 322 durchgeführt werden kann.

Gemäß der Erfindung wird eine Bestimmung der Korrekturwerte 330 durchgeführt, wenn zumindest ein Öffnungssignal 332, 334, 336 den geöffneten Zustand der Tür anzeigt. Je nach Ausführungsbeispiel kann das Öffnungssignal 332, 334 verwendet werden, um das Abbild 320 zu erfassen, das anschließend zum Bestimmen der Korrekturwerte 330 verwendet wird, oder das Öffnungssignal 336 kann verwendet werden, um ein bereits vorliegendes Abbild 320 zum Bestimmen der Korrekturwerte 330 zu verwenden.

Um den geöffneten Zustand der Tür zu Erkennen wird beispielsweise eine Sensorik eingesetzt. Beispielsweise wird ein mit der Tür gekoppelter Winkelgeber 336 eingesetzt, um das Öffnungssignal 332 bereitzustellen, wenn die Tür einen vorbestimmten Öffnungswinkel aufweist. Zusätzlich oder alternativ wird das Öffnungssignal 334 unter Verwendung eines Zeitgebers 340 bereitgestellt, beispielsweise eine vorbestimmte Zeitdauer nach einem Öffnen der Tür. Das Öffnen der Tür kann unter Verwendung einer Sensorik, beispielsweise eines Schalters oder durch eine Bildauswertung von unter Verwendung der Bilderfassungseinrichtung 108 erfassten Abbildern erkannt werden.

Gemäß einem Ausführungsbeispiel wird der geöffnete Zustand erkannt, indem das Abbild 320 unter Verwendung einer Auswerteeinrichtung 342 ausgewertet wird, um ein vorbestimmtes Merkmal, beispielsweise das in Fig. 2 gezeigte Türschloss oder eine Kante der Wand des Haushaltgeräts, in dem Abbild 320 zu erkennen. Wenn das vorbestimmte Merkmal in dem Abbild 320 erkannt wird, wird das Abbild 320 gemäß einem Ausführungsbeispiel verwendet, um die Korrekturwerte 330 zu bestimmen. Dazu ist die Auswerteeinrichtung 342 beispielsweise ausgebildet, um das Öffnungssignal 336 an die Bestimmungseinrichtung 328 bereitzustellen.

Gemäß einem Ausführungsbeispiel umfasst die Vorrichtung 300 ferner eine Bestimmungseinrichtung 350 und eine Auswahleinrichtung 352. Die Bestimmungseinrichtung 350 ist ausgebildet, um das Bild 330 zu verwenden, um einen Objektparameter 354 zumindest eines von dem Bild 330 abgebildeten Objekts zu bestimmen, beispielsweise eine Farbe, ein Material, eine Struktur, eine Größe, ein Muster und/oder eine Art des Objekts. Beispielsweise kann auf diese Weise eine Farbe eines Wäschestücks bestimmt werden, dass sich in der Trommel einer Waschmaschine befindet. Die Bestimmungseinrichtung 350 ist ausgebildet, um den Objektparameter 354 bereitzustellen. Die Auswahleinrichtung 352 ist gemäß einem Ausführungsbeispiel ausgebildet, um ein Betriebsprogramm zum Betreiben des Haushaltsgeräts unter Verwendung des Objektparameters 354 auszuwählen und beispielsweise ein Steuersignal 356 zum Starten oder Anzeigen des Betriebsprogramms bereitzustellen. Das Betriebsprogramm kann beispielsweise ein geeignetes Waschprogramm zum Waschen des von dem Bild 330 abgebildeten Objekts sein.

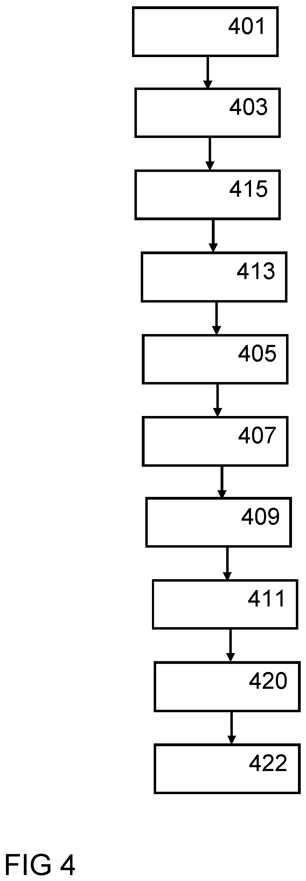

Figur 4 zeigt ein Ausführungsbeispiel eines Ablaufdiagramms eines Verfahrens zum Betreiben einer Bilderfassungseinrichtung, wie sie beispielweise anhand der Figuren 1 und 2 beschrieben ist. Das Verfahren kann beispielsweise unter Verwendung von Einrichtungen der anhand von Figur 3 beschriebenen Vorrichtung ausgeführt werden.

Optional wird in einem Schritt 401 ein Abbild eines Abschnitts einer Wand des Haushaltsgeräts erfasst. Das erfasste Abbild des Abschnitts der Wand wird in einem Schritt 403 eingelesen und in einem Schritt 405 zum Bestimmen von für einen Weißabgleich der

Bilderfassungseinrichtung geeigneten Korrekturwerten verwendet. Zur Bestimmung der Korrekturwerte wird beispielsweise auf bekannte Verfahren zurückgegriffen. Optional wird in einem Schritt 407 ein Abbild eines Innenraums des Haushaltgeräts erfasst. Das erfasste Abbild des Innenraums wird in einem Schritt 409 eingelesen. In einem Schritt 411 wird unter Verwendung der Korrekturwerte ein Weißabgleich des Abbilds des Innenraums durchgeführt. Daraus ergibt sich ein Bild des Innenraums. Zur Durchführung des Weißabgleichs wird beispielsweise auf bekannte Verfahren zurückgegriffen.

Das Verfahren umfasst einen Schritt 413, in dem ein Öffnungssignal bereitgestellt wird, das den geöffneten Zustand der Tür anzeigt. Das Öffnungssignal kann auf unterschiedliche Weise und unter Verwendung optionaler Einheiten bestimmt und bereitgestellt werden. Beispielsweise wird in einem Schritt 415 das Abbild des Abschnitts der Wand ausgewertet, um nach einem vorbestimmten Merkmal zu suchen. Wenn das vorbestimmte Merkmal in dem Abbild erkannt wird, wird das Öffnungssignal in dem Schritt 413 bereitgestellt. Je nach Ausführungsbeispiel wird das Öffnungssignal verwendet, um die Korrekturwerte unter Verwendung eines bereits vorhandenen Abbilds der Wand zu bestimmen oder ein entsprechendes Abbild der Wand zu erfassen, das anschließend zum Bestimmen der Korrekturwerte verwendet wird.

Gemäß der Erfindung umfasst das Verfahren einen Schritt 420, in dem das Bild verwendet wird, um einen Objektparameter zumindest eines von dem Bild abgebildeten Objekts zu bestimmen. Dazu wird beispielsweise eine geeignet Bildauswertung durchgeführt. In einem Schritt 422 wird der Objektparameter verwendet, um ein Betriebsprogramm zum Betreiben des Haushaltsgeräts auszuwählen.

Bezüglich der Figuren 1 bis 4 werden im Folgenden verwendete Begriffe erläutert:
Accessoires: Merkmale für die Wäscheerkennung z.B. Knopfleiste bei Hemden, Pailletten-Aufnäher, Gummizug bei Hosen.
Beschädigung von Wäscheteilen: Unter Beschädigung von Wäscheteilen wird im Zusammenhang des Waschens verstanden, wenn ein Wäscheteil eine Größe / Form ändert (z.B. durch Einlaufen), das Material des Wäscheteils geschädigt wird (z.B. aggressives Waschmittel bei Seide) oder sich die Farbe von Wäscheteilen ändert (z.B. durch Farbübertrag oder Ausbleichen).
Cloudlösung: Recheneinheit, welche sich nicht lokal in einem Netzwerk mit der Waschmaschine befindet; eine direkte Kommunikation zwischen Waschmaschine und Recheneinheit ist nicht möglich.
Farbe: Farbe im sichtbaren Spektrum z.B. weiß, schwarz, blau, ... bunt wird für die Wäscheerkennung auch als Farbe bewertet
Flecken: Punktuelle Verschmutzung eines Wäscheteils
Groberkennung: Zur Erkennung eines Wäschepostens wird nicht jedes einzelne Teil untersucht, sondern nur eine Teilmenge; die Erkenntnisse werden dann auf den gesamten Wäscheposten bezogen.
Größe: Größenabschätzung der Wäscheteile über Volumen
Kamera: Elektronische Kamera, bestehend aus einem Bildwandler (Chip; auf CCD oder CMOS)
Logo: Erkennbare Logos auf Wäscheteilen z.B. Markenlogos, Firmenlogos bei Arbeitskleidung
Lokale Recheneinheit: Recheneinheit, die sich lokal in einem Netzwerk mit der Waschmaschine befindet; eine direkte Kommunikation zwischen Waschmaschine und Recheneinheit ist möglich.
Muster: Optisch erkennbare Muster der Wäscheteile z.B. kariert, gestreift, gepunktet ...
Parameter: Parameter, die die Einstellungen für ein spezielles Waschprogramm beschreiben, welche von der Waschmaschine umgesetzt werden, z.B. Wassermenge, Temperatur, Drehzahl, Schleuderrehzahl, Waschmittel (wenn automatisch dosierbar).
Reversierbetrieb: Programmphase, in der die Waschmaschinentrommel in einem definierten Rhythmus bewegt wird. Während der Bewegung bewegt sich die Wäsche im Inneren der Trommel, sodass andere Wäscheteile nach vorne kommen und durch einen Sensor detektiert werden können. Zwischen den Bewegungsrhythmen steht die Trommel, sodass die Sensoren den ruhenden Wäscheposten anallysieren können.
Spektroskopie-Sensor: zur Erkennung der Textilart kann ein Spektroskopie-Sensor verwendet werden. Dieser sollte im Spektrum von ca. 1000nm bis 1900nm arbeiten, damit verschiedene Textilarten voneinander unterschieden werden können.
Struktur: Bezieht sich im Bereich der Wäscheerkennung auf die Verarbeitung der Textilart in Bezug auf Oberflächenbeschaffenheit; Im Rahmen der Erkennung mittels Kamera ist die Struktur als ein optisches Merkmal zu interpretieren z.B. Frottier, Cord, Strickwaren, Doppelgewebe ...
Textilart: Bezieht sich im Kontext der Wäscheerkennung auf die textilen Faserstoffe gemäß DIN60000; unterteilt werden die textilen Faserstoffe zunächst in Naturfasern (pflanzliche, tierische und mineralische Fasern) und Chemiefasern (aus natürlichen oder synthetischen Polymeren). Die Textilart wird im Wesentlichen durch einen Spektroskopie-Sensor bestimmt werden. Ausprägungen sind z.B. Baumwolle, Seide, Polyester ...
Wäscheart: Merkmal für die Bezeichnung eines Wäsche- oder Kleidungsstückes z.B. Handtuch, Hose, Shirt, Unterwäsche ....
Wäscheerkennung: Automatisiertes Analysieren eines Wäschepostens in Bezug auf verschiedene Merkmale, wie z.B. Farbe, Textilart, Struktur, Größe, Muster, Logo, Accessoires, Wäscheart. Die Wäscheerkennung läuft nach dem Starten der Waschmaschine, vor dem Beginn des eigentlichen Waschprogramms ab, damit zunächst die passenden Parameter ermittelt werden können.
Waschergebnis: Messgröße, in der das Ergebnis eines Reinigungsvorgangs der Waschmaschine dargestellt werden kann, je sauberer die Wäscheteile, desto besser das Waschergebnis; ein schlechtes Waschergebnis sind z.B. beschädigte Wäscheteile; Vergleiche auch Beschädigung von Wäscheteilen.
Wäscheteil: ein einzelnes Stück (z.B. Kleidungsstück), welches in der Waschmaschine gereinigt werden soll.
Wäscheposten: Mehrere Wäscheteile, welche zusammen in einem Waschgang gereinigt werden sollen.
Waschgang: Ein Waschgang beschreibt den kompletten Zyklus einer Waschmaschine, der zum Reinigen eines Wäschepostens notwendig ist.

## Patentansprüche

1. Verfahren zum Betreiben eines Haushaltsgeräts (100), das einen Innenraum (102) des Haushaltsgeräts (100) verschließende Tür (104) und eine an der Tür (104) angeordnete Bilderfassungseinrichtung (108) aufweist, wobei das Verfahren die folgenden Schritte umfasst: Einlesen (403) eines Abbilds (320) eines Abschnitts (212) einer Wand (106) des Haushaltsgeräts (100), wobei das Abbild (320) des Abschnitts (212) Bilddaten repräsentiert, die unter Verwendung der Bilderfassungseinrichtung (108) erfasst wurden, während sich die Tür (104) in einem geöffneten Zustand befindet;
Bestimmen (405) von für einen Weißabgleich der Bilderfassungseinrichtung (108) geeigneten Korrekturwerten (326) unter Verwendung des Abbilds (320) des Abschnitts (212);
Einlesen (409) eines Abbilds (322) eines Innenraums (102) des Haushaltsgeräts (100),
wobei das Abbild (322) des Innenraums (102) Bilddaten repräsentiert, die unter Verwendung der Bilderfassungseinrichtung (108) erfasst wurden, während sich die Tür (104) in einem geschlossenen Zustand befindet; und
Durchführen (411) eines Weißabgleichs des Abbilds (322) des Innenraums (102) unter Verwendung der Korrekturwerte (326), um ein Bild (330) des Innenraums (102) zu erhalten; und
Bereitstellen eines den geöffneten Zustand der Tür (104) anzeigenden Öffnungssignals (332, 334, 336), wobei der Schritt (405) des Bestimmens der Korrekturwerte (326) ansprechend auf das Öffnungssignal (332, 334, 336) ausgeführt wird; und
Bestimmen (420) eines Objektparameters zumindest eines von dem Bild abgebildeten Objekts; und Auswählen (422) eines Betriebsprogramms zum Betreiben des Haushaltsgeräts (100) unter Verwendung des Objektparameters.

2. Verfahren gemäß Anspruch 1, bei dem im Schritt (413) des Bereitstellens das Öffnungssignal (332) unter Verwendung eines mit der Tür (104) gekoppelten Winkelgebers (336) bereitgestellt wird.

3. Verfahren gemäß Anspruch 1, bei dem im Schritt (413) des Bereitstellens das Öffnungssignal (334) unter Verwendung eines durch ein Öffnen der Tür (104) gestarteten Zeitgebers (340) bereitgestellt wird.

4. Verfahren gemäß Anspruch 1, mit einem Schritt (415) des Auswertens des Abbilds (320) des Abschnitts (212), um ein vorbestimmtes Merkmal in dem Abbild (320) des Abschnitts (212) zu erkennen, wobei der Schritt (413) des Bereitstellens des Öffnungssignals (336) ansprechend auf ein Erkennen des vorbestimmten Merkmals durchgeführt wird.

5. Verfahren gemäß Anspruch 4, bei dem im Schritt (415) des Auswertens ein Türschloss (214) der Tür (104) oder eine Kante der Wand (106) des Haushaltsgeräts (100) als das vorbestimmte Merkmal erkannt wird.

6. Verfahren gemäß einem der vorangegangenen Ansprüche, mit einem Schritt (401) des Erfassens des Abbilds (320) des Abschnitts (212) der Wand (106) des Haushaltsgeräts (100) unter Verwendung der Bilderfassungseinrichtung (108) während sich die Tür (104) in dem geöffneten Zustand befindet, und einem Schritt (407) des Erfassens des Abbilds (322) des Innenraums (102) des Haushaltsgeräts (100) unter Verwendung der Bilderfassungseinrichtung (108) während sich die Tür (104) in dem geschlossenen Zustand befindet.

7. Verfahren gemäß Anspruch 6, bei dem im Schritt (401) des Erfassens das Abbild (320) des Abschnitts (212) erfasst wird, der eine Farbkarte oder eine farbige Fläche umfasst.

8. Verfahren gemäß Anspruch 6 oder 7, bei dem im Schritt (401) des Erfassens das Abbild (320) des Abschnitts (212) erfasst wird, der einen Bereich einer Außenwand des Haushaltsgeräts (100) repräsentiert.

9. Verfahren gemäß Anspruch 1, wobei im Schritt (420) des Bestimmens eine Farbe, ein Material, eine Struktur, eine Größe, ein Muster und/oder eine Art des Objekts als der Objektparameter bestimmt werden.

## Claims

1. Method for operating a domestic appliance (100) which has a door (104) that closes an interior (102) of the domestic appliance (100), and an image acquisition device (108) that is arranged on the door (104), wherein the method comprises the following steps:
reading in (403) a reference image (320) of a portion (212) of a wall (106) of the domestic appliance (100), wherein the reference image (320) of the portion (212) represents image data acquired using the image acquisition device (108) while the door (104) is in an open state;
determining (405) correction values (326) suitable for a white balance of the image acquisition device (108) using the reference image (320) of the portion (212);
reading in (409) a reference image (322) of an interior (102) of the domestic appliance (100),
wherein the reference image (322) of the interior (102) represents image data acquired using the image acquisition device (108) while the door (104) is in a closed state; and
performing (411) a white balance of the reference image (322) of the interior (102) using the correction values (326) in order to obtain an image (330) of the interior (102); and
providing an opening signal (332, 334, 336) that displays the opened state of the door (104), wherein the step (405) of determining the correction values (326) is executed in response to the opening signal (332, 334, 336); and
determining (420) an object parameter of at least one object imaged by the image; and selecting (422) an operating program to operate the domestic appliance (100) using the object parameter.

2. Method according to claim 1, in which, in the providing step (413), the opening signal (332) is provided using an angle indicator (336) that is coupled to the door (104).

3. Method according to claim 1, in which, in the providing step (413), the opening signal (334) is provided using a time indicator (340) that is started by opening the door (104).

4. Method according to claim 1, comprising a step (415) of evaluating the reference image (320) of the portion (212) in order to detect a predetermined feature in the reference image (320) of the portion (212), wherein the step (413) of providing the opening signal (336) is performed in response to the detection of the predetermined feature.

5. Method according to claim 4, in which, in the evaluating step (415), a door lock (214) of the door (104) or an edge of the wall (106) of the domestic appliance (100) is detected as the predetermined feature.

6. Method according to any of the preceding claims, comprising a step (401) of acquiring the reference image (320) of the portion (212) of the wall (106) of the domestic appliance (100) using the image acquisition device (108) while the door (104) is in the opened state, and a step (407) of acquiring the reference image (322) of the interior (102) of the domestic appliance (100) using the image acquisition device (108) while the door (104) is in the closed state.

7. Method according to claim 6, in which, in the acquiring step (401), the reference image (320) of the portion (212) that comprises a colour map or a coloured area is acquired.

8. Method according to claim 6 or 7, in which, in the acquiring step (401), the reference image (320) of the portion (212) that represents a region of an outer wall of the domestic appliance (100) is acquired.

9. Method according to claim 1, wherein, in the determining step (420), a colour, a material, a structure, a size, a pattern and/or a type of object is determined as the object parameter.

## Revendications

1. Procédé permettant de faire fonctionner un appareil électroménager (100) présentant une porte (104) fermant un espace intérieur (102) de l'appareil électroménager (100) et un dispositif de détection d'images (108) disposé sur la porte (104), dans lequel le procédé comprend les étapes suivantes :
lecture (403) d'une représentation (320) d'une section (212) d'une paroi (106) de l'appareil électroménager (100), dans lequel la représentation (320) de la section (212) représente des données d'image, lesquelles ont été détectées à l'aide du dispositif de détection d'images (108), alors que la porte (104) se trouve dans un état ouvert ;
détermination (405) de valeurs de correction (326) adaptées à une balance des blancs du dispositif de détection d'images (108) à l'aide de la représentation (320) de la section (212) ;
lecture (409) d'une représentation (322) d'un espace intérieur (102) de l'appareil électroménager (100),
dans lequel la représentation (322) de l'espace intérieur (102) représente des données d'image, lesquelles ont été détectées à l'aide du dispositif de détection d'images (108), alors que la porte (104) se trouve dans un état fermé ; et
réalisation (411) d'une balance des blancs de la représentation (322) de l'espace intérieur (102) à l'aide des valeurs de correction (326) afin d'obtenir une image (330) de l'espace intérieur (102) ; et
fourniture d'un signal d'ouverture (332, 334, 336) signalant l'état ouvert de la porte (104), dans lequel l'étape (405) de détermination des valeurs de correction (326) est exécutée en réponse au signal d'ouverture (332, 334, 336) ; et
détermination (420) d'un paramètre d'objet d'au moins un des objets représentés sur l'image ; et sélection (422) d'un programme de fonctionnement permettant de faire fonctionner l'appareil électroménager (100) à l'aide du paramètre d'objet.

2. Procédé selon la revendication 1, dans lequel, à l'étape (413) de fourniture, le signal d'ouverture (332) est fourni à l'aide d'un capteur angulaire (336) couplé à la porte (104).

3. Procédé selon la revendication 1, dans lequel, à l'étape (413) de fourniture, le signal d'ouverture (334) est fourni à l'aide d'une horloge (340) déclenchée par une ouverture de la porte (104).

4. Procédé selon la revendication 1, comportant une étape (415) d'analyse de la représentation (320) de la section (212) afin de reconnaitre une caractéristique prédéterminée dans la représentation (320) de la section (212), dans lequel l'étape (413) de fourniture du signal d'ouverture (336) est réalisée en réponse au fait de reconnaitre la caractéristique prédéterminée.

5. Procédé selon la revendication 4, dans lequel, à l'étape (415) d'analyse, une serrure de porte (214) de la porte (104) ou un bord de la paroi (106) de l'appareil électroménager (100) est reconnu comme la caractéristique prédéterminée.

6. Procédé selon l'une des revendications précédentes, comportant une étape (401) de détection de la représentation (320) de la section (212) de la paroi (106) de l'appareil électroménager (100) à l'aide du dispositif de détection d'images (108) alors que la porte (104) se trouve à l'état ouvert, et une étape (407) de détection de la représentation (322) de l'espace intérieur (102) de l'appareil électroménager (100) à l'aide du dispositif de détection d'images (108) alors que la porte (104) se trouve à l'état fermé.

7. Procédé selon la revendication 6, dans lequel, à l'étape (401) de détection, la représentation (320) de la section (212) qui comprend une charte de couleurs ou une surface colorée est détectée.

8. Procédé selon la revendication 6 ou 7, dans lequel, à l'étape (401) de détection, la représentation (320) de la section (212) qui représente une zone d'une paroi extérieure de l'appareil électroménager (100) est détectée.

9. Procédé selon la revendication 1, dans lequel, à l'étape (420) de détermination, une couleur, un matériau, une structure, une taille, un motif et/ou un type de l'objet sont déterminés en tant que paramètres d'objet.
